# NOUVEAU FASCICULE DE BREVET EUROPEEN

(11) **EP 1 787 839 B2**
(45) Date de publication et mention de la décision concernant l'opposition: **19.07.2017**
(45) Mention de la délivrance du brevet: 04.05.2011
(21) Numéro de dépôt: 06124058.6
(22) Date de dépôt: 14.11.2006
(51) Int. Cl.: B60R 5/04, B60J 7/00

(54) **Store à enrouleur pour véhicule automobile, présentant des moyens de compensation de jeux, et véhicule correspondant**
Fensterrollo für Motorfahrzeug mit Mitteln zur Kompensation von Spiel und korrespondierendes Fahrzeug
Roller blind for motor vehicle with means to compensate for play and corresponding vehicle

(30) Priorité: 18.11.2005 FR 0511729
(43) Date de publication de la demande: 23.05.2007
(73) Titulaire: Advanced Comfort Systems France SAS - ACS France, 79300 Bressuire (FR)
(72) Inventeur: Dubouilh, Gilles, 47400 Fauguerolles (FR); Dussert-Vidalet, Chantal, 75017 Paris (FR); Moreau, Stéphane, 79700 Le Temple (FR)
(74) Mandataire: Vidon Brevets & Stratégie

(56) Documents cités:
- EP-A- 0 364 793
- EP-A- 1 053 898
- DE-A1- 10 353 778
- DE-U1- 9 015 220
- US-A- 5 404 926
- US-A1- 2002 060 468

## Description

Le domaine de l'invention est celui de l'occultation de surfaces vitrées d'un véhicule automobile, et plus précisément des stores à enrouleur.

On équipe depuis longtemps les véhicules automobiles de stores à enrouleur, pour permettre l'occultation d'une vitre latérale ou d'une vitre de custode, afin de protéger en cas de besoin les occupants du véhicule de la chaleur ou de la lumière. De tels stores ont également été développés plus récemment pour occulter des pavillons vitrés. Plus généralement, des stores à enrouleur peuvent être mis en oeuvre en regard de toute surface vitrée, ainsi que pour dissimuler un espace, par exemple sous la forme d'un cache-bagage.

Ces stores à enrouleur comprennent généralement une toile, montée sur un tube enrouleur, lui-même mobile en rotation grâce a deux paliers. Ces paliers peuvent être directement fixés à la structure du véhicule ou montés dans un boîtier, ou cassette, recevant le tube enrouleur et la toile d'occultation lorsqu'elle est repliée. Ce boîtier est alors solidarisé à un élément du véhicule, et par exemple à une tablette arrière pour un store de custode.

Une barre de tirage est généralement associée à l'autre extrémité de la toile d'occultation, pour permettre son déploiement. Des moyens d'accrochage de cette barre de tirage permettent de retenir la toile dans sa position déployée, dans laquelle elle occulte la partie vitrée. Des moyens de rappel agissent sur le tube enrouleur, tendant à ramener la toile dans la position repliée.

Le déploiement de la toile, ainsi que son repli, peuvent être manuels ou motorisés.

La barre de tirage peut être guidée par des rails dans lesquels coulissent chacune de ses extrémités. De tels rails sont généralement intégrés au véhicule et sont montés et/ou dissimulés dans la garniture intérieure du véhicule. Ils peuvent par exemple être fixés à un montant latéral du véhicule, dans le cas particulier d'un store pour vitre arrière.

Le boîtier du store et/ou le cas échéant les paliers directement sont solidarisés à la structure du véhicule, soit directement sur un élément de structure, soit à un élément de la garniture intérieure. Dans le cas particulier d'un store à enrouleur pour vitre arrière par exemple, de tels paliers peuvent notamment être fixés sous la tablette arrière du véhicule.

Dans certains cas, des écarts relativement importants peuvent apparaître entre l'emplacement du boîtier, ou des paliers, et ceux des rails. En effet, le montage dans le domaine automobile impose des jeux relativement importants, et il n'est pas rare qu'un jeu de quelques millimètres ou dixièmes de millimètre existe entre différents éléments. C'est par exemple le cas entre une tablette arrière (portant le store) et un élément de garniture latéral (portant le rail).

Un tel jeu peut rendre difficile, voire impossible, le déplacement de la barre de tirage dans les rails.

Ceci pose tout d'abord des problèmes importants de montage. Généralement, la tablette est installée dans un premier temps. Dans un second temps, on met en place les éléments de garniture latéraux. Il faut alors associer les rails et le store, de façon que la barre de tirage puisse être guidée par ces derniers. Si le jeu est important, le montage peut être impossible, ou à tout le moins très difficile.

Cela peut également introduire une différence de parallélisme, et en conséquence une mauvaise tension de la toile déployée. En effet, la barre de tirage n'est alors plus parallèle au boîtier, et l'un des côtés de la toile va présenter un ou plusieurs plis. Cela n'est pas acceptable, notamment sur le plan esthétique, mais également sur celui du bruit (la toile risque de bouger, en présence d'air, et de claquer). Ces mouvements peuvent également être gênants pour le conducteur.

Une solution classique à ce problème est donc de prévoir des moyens de réglage de la longueur du dispositif du tube enrouleur en fonction de la distance entre les rails intégrés au véhicule. Cette solution présente clairement des inconvénients, puisqu'elle suppose une intervention manuelle supplémentaire, relativement longue et précise et donc coûteuse.

Le document US 5 404 926 décrit un store d'occultation motorisé qui comprend une toile d'occultation dont une extrémité est reliée à un tube enrouleur et l'autre extrémité est reliée à une barre de tirage guidée le long de deux rails. De façon à combler le défaut de parallélisme entre les rails de guidage, ce store met en oeuvre une barre de tirage télescopique. Le document DE-A-10353778 montre le préambule de la revendication 1.

Il n'existe toutefois aucun dispositif permettant, lors du montage, de compenser de manière « automatique » et efficace les écarts de dimensions entre l'emplacement du véhicule automobile, prévu pour intégrer le store à enrouleur, et ce dernier, et encore moins de régler de manière conjuguée et simultanée les deux types de jeux décrits plus hauts.

L'invention à notamment pour objectif de pallier à ces inconvénients de l'art antérieur.

Plus précisément, l'invention à pour objectif de fournir une technique permettant de s'affranchir des jeux éventuels existant sur un véhicule, et permettant notamment d'intégrer un store à enrouleur dans un véhicule, même si les dimensions de ce dernier ne sont pas exactement les même que celles de l'écartement prévu dans le véhicule pour le recevoir.

Un objectif supplémentaire de l'invention est de fournir, dans certains modes de réalisation, une telle technique qui permette d'obtenir une toile de store parfaitement tendue en position déployée, même si un écart existe entre la position des moyens d'accrochage et des paliers ou du boîtier. Ainsi, un objectif de l'invention est donc de fournir une technique qui permette de conjuguer au moins deux types de jeux intervenant dans le montage d'un store à enrouleur dans un véhicule automobile, sans pour autant dédoubler le nombre de pièce à monter et les moyens à mettre en oeuvre.

Un autre objectif de l'invention est de fournir une telle technique, ne nécessitant aucune intervention autre que celle du montage du store et de ses moyens d'accrochage, et notamment aucun réglage après ce montage.

L'invention a également pour objectif de fournir une telle technique, qui ne rende pas plus complexe, ni plus coûteuse la fabrication des stores à enrouleur.

Plus généralement, l'invention a pour objectif de fournir des stores à enrouleur présentant sensiblement la même complexité et le même coût que les stores connus, tout en s'affranchissant des problèmes de tolérance du domaine automobile.

Ces objectifs, ainsi que d'autres qui apparaîtront plus clairement par la suite, sont atteints selon l'invention à l'aide d'un store à enrouleur pour véhicule automobile, comprenant une toile d'occultation solidaire, par une première de ses extrémités, d'un tube enrouleur monté sur deux paliers fixes et, par la seconde de ses extrémités, d'une barre de tirage guidée le long d'au moins un rail intégré au véhicule.

Un tel store comprend des moyens de solidarisation d'au moins un des paliers fixes avec un des rails, les moyens de solidarisation étant mobiles en translation par rapport au palier fixe suivant un axe sensiblement parallèle au tube enrouleur.

Ainsi, l'invention repose sur une approche nouvelle et inventive d'absorption de la dispersion latérale d'un véhicule. En effet, l'invention propose de solidariser un store à enrouleur dans un véhicule, offrant un degré de liberté latéral selon un axe sensiblement parallèle à l'axe du tube enrouleur, et compensant ainsi un éventuel écart entre la largeur de l'emplacement du véhicule prévu pour recevoir le store, et la distance entre les deux paliers de fixation du store.

La technique de l'invention permet ainsi de faciliter le montage d'un store, grâce à un élément nouveau, intermédiaire entre le rail de guidage et le palier de fixation, qui est mobile en translation, et absorbe ainsi un écart éventuel.

Selon l'invention, les moyens de solidarisation présentent au moins deux doigts parallèles au tube enrouleur, et circulent dans des lumières ménagées dans le palier fixe.

Ainsi, le palier fixe est solidarisé au rail, et donc au véhicule, par l'intermédiaire d'un élément de solidarisation. Cette solidarisation est mise en oeuvre par l'intermédiaire de doigts conçus dans le palier fixe, et engagés dans l'élément de solidarisation. Ce sont ces doigts qui sont mobiles en translation dans les ouvertures de l'élément de solidarisation, et qui offrent ainsi le degré de liberté nouveau de l'invention.

Avantageusement, les moyens de solidarisation sont solidaires avec un palier mobile accouplé avec le tube enrouleur.

En d'autres termes, le tube enrouleur du store est solidarisé au palier fixe par l'intermédiaire d'un palier mobile.

De façon avantageuse, les moyens de solidarisation comprennent une portion guide-rail, destinée à coopérer avec un élément d'assemblage complémentaire prévu à cet effet sur le rail.

Cette portion permet ainsi d'assembler rapidement et simplement l'ensemble formé par le store, le palier mobile, le palier fixe au rail, lui-même intégré à la garniture du véhicule.

Avantageusement, le store enrouleur selon l'invention comprend des premiers moyens de rappel tendant à éloigner le palier fixe et les moyens de solidarisation.

De tels moyens de rappel permettent d'éviter tout mouvement latéral de l'ensemble du store, qui, une fois monté dans le véhicule, ne doit pas coulisser ou se déplacer latéralement, lorsque le véhicule est en route, ou lorsque le store est manipulé.

De manière avantageuse, la barre de tirage est entraînée par au moins un câble guidé dans un des rails et actionné par des moyens de motorisation montés sur un support solidaire des paliers fixes.

Un tel câble peut aussi être actionné manuellement.

Avantageusement, le câble circule dans une gaine souple entre les moyens de motorisation et ledit rail, et la gaine est montée de façon à assurer la fonction des premiers moyens de rappel.

En effet, la gaine souple est insérée dans la portion guide-rail de l'élément de solidarisation, et c'est la flexibilité de cette gaine qui agit sur l'élément de solidarisation de façon qu'il s'éloigne du palier fixe et ainsi à empêcher tout mouvement non souhaité une fois que le dispositif est monté et assemblé. Cette utilisation d'une gaine flexible comme moyen de rappel évite l'insertion de moyens de rappel supplémentaires classiques tels que des ressorts.

De manière avantageuse, le palier mobile est mobile en rotation dans un plan perpendiculaire à l'axe dudit tube enrouleur, sur une plage angulaire déterminée.

Avantageusement, le palier fixe présente une ouverture périphérique de guidage d'un pion formé dans ledit palier mobile.

Cette ouverture permet ainsi le mouvement en rotation du pion du palier mobile, autour de l'axe formé par le tube enrouleur. Le palier mobile réalise alors une sorte de mouvement de balancier par rapport au palier fixe.

De manière avantageuse, le store de l'invention comprend des seconds moyens de rappel agissant sur le palier mobile, de façon à le maintenir dans une position assurant une tension uniforme de ladite toile d'occultation.

Ce palier mobile en rotation par rapport au palier fixe, et régi par des moyens de rappel, permet alors d'associer au dispositif de l'invention une seconde fonction majeure dans le domaine de l'automobile : une tension uniforme de la toile. Ainsi, le dispositif de l'invention assure deux fonctions principales simultanément : l'absorption de la dispersion latérale du véhicule, ainsi qu'un réglage de la tension de la toile, grâce à un unique élément. Il simplifie et réduit le nombre de pièces à mettre en oeuvre.

Avantageusement, les seconds moyens de rappel agissent sur le pion.

L'invention concerne également un véhicule automobile comprenant au moins un store à enrouleur tel que décrit ci-dessus.

D'autres caractéristiques et avantages de l'invention apparaîtront plus clairement à la lecture de la description suivante d'un mode de réalisation préférentiel de l'invention, donné à titre d'exemple illustratif et non limitatif, et des dessins annexés parmi lesquels :
- la figure 1 est une vue de face du dispositif selon un mode de réalisation préférentiel de l'invention, illustrant la mobilité en translation des moyens de solidarisation par rapport à l'un des paliers fixes du store enrouleur;
- la figure 2 est une vue en trois dimensions d'un palier fixe associé à son élément de solidarisation;
- la figure 3 est une vue en trois dimensions d'un mode de réalisation particulier illustrant la gaine flexible agissant comme moyens de rappel sur l'élément de solidarisation ;
- la figure 4 est une vue en coupe du dispositif de l'invention illustrant le mouvement du palier mobile par rapport au palier fixe ;
- la figure 5 est une vue en trois dimensions représentant le palier fixe associé au palier mobile en rotation et ses moyens de rappel ;
- la figure 6 est un organigramme des étapes mises en oeuvre pour le montage du dispositif selon un mode de réalisation préférentiel de l'invention.

Comme expliqué précédemment, l'ensemble formé par le store enrouleur, son boîtier et ses moyens d'accrochage doit être intégré au véhicule automobile. On comprend alors que pour être solidarisés entre eux et compatibles, les deux blocs « rails - garniture », représentant le véhicule automobile, et « tube enrouleur - paliers - boîtier », représentant le store à enrouleur, doivent avoir sensiblement les mêmes dimensions, c'est-à-dire que la distance inter-rails doit être sensiblement la même que la longueur du tube enrouleur, de façon que le montage soit aisé.

En effet, de tels écarts, ou jeux, sont inhérents au domaine de l'automobile. La construction automobile prévoit classiquement des tolérances relativement importantes, de l'ordre de quelques millimètres dans certains cas.

Il est alors impossible de savoir à l'avance si les dimensions du boîtier et du tube enrouleur seront correctement conçues pour s'intégrer dans l'espacement du véhicule prévu à cet effet.

On identifie donc aujourd'hui deux types majeurs de jeux et d'écarts à prendre en compte dans le montage d'un store à enrouleur dans un véhicule automobile : tout d'abord, des premiers jeux dus à une différence entre la dimension du store et l'emplacement prévu pour le recevoir dans le véhicule automobile, et ensuite des seconds jeux créant un problème de parallélisme entre les moyens d'accrochage de la barre de tirage et le boîtier (ou les deux paliers).

L'invention repose donc sur une nouvelle approche de la solidarisation d'un store à enrouleur dans un véhicule automobile, permettant de compenser, lors du montage, une différence éventuelle entre l'emplacement prévu dans le véhicule automobile pour recevoir le store, et la dimension de ce dernier, tout en assurant simultanément, dans le mode de réalisation décrit ci-après, une tension uniforme de la toile d'occultation, lorsque celui-ci est en cours de fonctionnement, c'est-à-dire en position déployée.

En d'autres termes, l'invention permet alors, dans ce mode de réalisation, un double auto-équilibrage d'un store enrouleur, et ce avec un unique système de fixation, ce dernier ayant d'une part un rôle d'absorption des différences de dimensions pouvant survenir lors du montage du store enrouleur, et d'autre part un rôle de compensation de parallélisme entre la barre de tirage et le tube enrouleur lors du fonctionnement.

On décrit par la suite un store enrouleur destiné à obturer une vitre arrière de véhicule automobile. Dans une telle configuration, les paliers de fixation du store sont vissés directement au boîtier dans lequel est rangée la toile d'occultation lorsque celle-ci est enroulée. On note que dans un second mode de réalisation, ils peuvent être fixés directement sous la tablette arrière. Lorsque la toile d'occultation est en position déployée, la barre de tirage s'accroche au sommet de la vitre arrière.

De telles configurations ne sont données qu'à titre d'exemples, et l'homme du métier saura aisément adapter la technique de l'invention à tout autre configuration de store à enrouleur pour vitre arrière, et plus généralement à toutes les surfaces vitrées du véhicule, et ce, quelle que soit leur forme, ainsi qu'à tout espace nécessitant d'être obturé, isolé de la lumière ou tout simplement protégé.

Aussi, et pour plus de clarté, les figures illustrent seulement une extrémité du tube enrouleur, c'est-à-dire un seul palier fixe, associé à ses moyens de solidarisation correspondants, selon l'invention, décrits plus en détail ci-après. Même si le store n'est pas représenté dans son intégralité, le même dispositif de solidarisation du store est généralement monté à l'autre extrémité du tube enrouleur, de manière à ce que le store soit fixé de manière symétrique, dans le cas où deux rails de guidage sont présents dans le véhicule.

Comme décrit en préambule, un store à enrouleur est classiquement monté dans un véhicule automobile grâce à deux paliers.

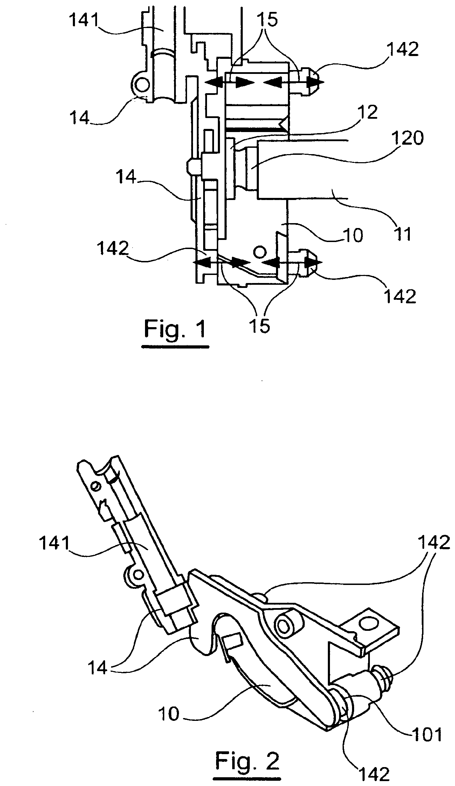

La figure 1 illustre, dans un mode de réalisation préférentiel de l'invention, le mécanisme associé à au moins un des paliers, de manière à permettre une absorption de la dispersion latérale du véhicule lors du montage du store.

Un store est solidarisé à l'un de ses paliers fixes 10 par l'intermédiaire d'un palier mobile 12, comprenant une portion d'arbre 120 dans laquelle vient s'insérer le tube enrouleur 11 du store. En cours de fonctionnement, lorsque le store (c'est-à-dire la toile d'occultation) est manipulé, le tube tourne donc, dans un sens ou dans l'autre, autour de la portion d'arbre 120 du palier mobile 12.

L'ensemble formé par le palier fixe 10, le palier mobile 12 et le tube enrouleur 11 (associé à la toile d'occultation, non représentée) est alors destiné à être intégré dans le véhicule automobile, et plus précisément doit être solidarisé à au moins un rail de guidage de la barre de tirage.

L'assemblage de cet ensemble est assuré par l'intermédiaire d'un élément 14 de solidarisation, comprenant notamment une portion 141, appelée portion guide-rail, permettant ainsi une solidarisation avec le rail 13. Une telle solidarisation peut par exemple être réalisée par simple encliquetage. On peut aussi prévoir des moyens complémentaires d'assemblage (collage, vissage...).

Cependant, il est impératif de prendre en compte des écarts importants pouvant survenir entre la longueur du tube enrouleur associé à chacun des deux paliers fixes, et l'emplacement prévu dans le véhicule pour recevoir le store à enrouleur. La technique de l'invention résout alors avantageusement cette contrainte en solidarisant le palier fixe 10 à son élément 14 de solidarisation avec un degré de liberté en translation, illustré par les flèches 15 sur la figure 1.

Pour cela, les éléments de solidarisation 14 présentent deux doigts 142 parallèles au tube enrouleur 11 dans lesquels vient s'insérer le palier fixe 10, et permettent ainsi un coulissement le long de ces deux doigts 15 de l'élément de solidarisation par rapport au palier fixe 10.

L'élément 14 forme ainsi des moyens de solidarisation entre le palier 10 fixe et le rail 13, mobiles en translation, selon sensiblement l'axe formé par le tube enrouleur. Il est ainsi possible de positionner précisément l'élément 14 par rapport au rail.

Un tel dispositif est alors très avantageux lors de l'assemblage d'un store à enrouleur avec un véhicule automobile, puisque grâce à ce mouvement de liberté en translation, il compensera tout flottement, fréquemment présent dans un tel montage.

La figure 2 est une vue complémentaire en trois dimensions de l'élément de solidarisation 14 et du palier fixe 10 isolés. Cette vue fait apparaître notamment une des deux lumières 101 ménagée dans palier fixe et recevant les deux doigts 142 de l'élément de solidarisation 14 parallèles au tube enrouleur (en relation avec la figure 1).

Une fois que l'ensemble formé par le palier fixe, le tube enrouleur et sa toile d'occultation est solidarisé au(x) rail(s) par l'intermédiaire de l'élément de solidarisation et notamment de la portion guide-rail de ce dernier, des moyens de rappels sont nécessaires pour bloquer le mouvement en translation du palier fixe par rapport au rail. Ces moyens tendent notamment à éloigner l'élément de solidarisation du palier fixe. Ainsi, en cours de fonctionnement, c'est-à-dire après le montage, tout mouvement éventuel devient impossible.

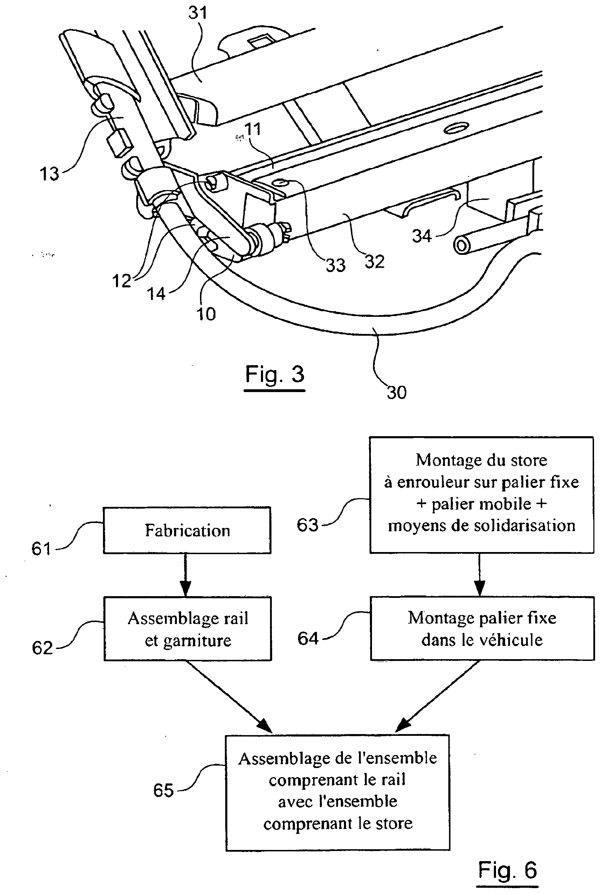

La figure 3 est une vue générale en trois dimensions illustrant l'ensemble du dispositif selon l'invention, et notamment de tels moyens de rappel dans un mode de réalisation préférentiel.

Dans ce mode de réalisation particulier, le palier fixe 10 est vissé au boîtier 32 (ou cassette) du store à enrouleur, dans lequel se trouve le tube enrouleur 11, par l'intermédiaire d'au moins une vis 33. On note que la toile d'occultation n'est pas représentée.

La barre de tirage 11 permet le déploiement ou l'enroulement du store autour de son tube enrouleur. Cette barre de tirage est entraînée à au moins une de ses extrémités par un câble guidé dans le rail 13. Ce câble est actionné soit manuellement, soit par un moteur 34, qui peut être monté directement sur la cassette ou au niveau des paliers fixes.

Classiquement, dans la section située entre le rail 13 et le moteur 34, le câble circule dans une gaine 30. Cette gaine a pour rôle premier de guider le câble entre le rail et le moteur, puisqu'il n'est plus guidé par le rail, et évite ainsi toute « dispersion » du câble, une fois que celui-ci est sorti du rail.

Selon l'invention, cette gaine 30 est souple, c'est-à-dire flexible, et permet est montée de façon à assurer une seconde fonction de rappel telle que définie précédemment. En effet, la gaine 30 flexible est insérée dans la portion 141 guide-rail de l'élément 14 de solidarisation. Ainsi, du fait de sa flexibilité, et du degré de liberté en translation de l'élément 14 de solidarisation par rapport au palier fixe 10, elle agit sur l'élément 14 pour l'éloigner du palier fixe 10.

Cette gaine flexible joue ainsi deux rôles : un rôle de guidage du câble, classique, plus un rôle nouveau de moyens de rappel. On évite ainsi l'utilisation de moyens et de pièces supplémentaires tels que des ressorts par exemple. Bien sûr, dans d'autres modes de réalisation, de tels moyens de rappel peuvent être utilisés, en remplacement ou en complément.

En d'autres termes, l'invention introduit un degré de liberté en translation permettant un montage aisé d'un store à enrouleur, sans réglage manuel, et assure de plus, en cours de fonctionnement, une stabilité du tube enrouleur, grâce à la présence de moyens de rappel. En effet, l'absence de ces moyens de rappel entraînerait des déplacements légers du tube enrouleur, lorsque le véhicule est en déplacement, du fait des déformations du châssis, ou lorsque le store est manipulé.

On sait par ailleurs qu'il est fréquent que les moyens d'accrochage de la barre de tirage et le tube enrouleur ne soient pas parfaitement parallèles. Ce manque de parallélisme peut créer des plis sur la toile d'occultation, en cours de fonctionnement, lorsque celle-ci est déployée.

Dans un mode de réalisation préférentiel, la présente invention intègre dans son dispositif des moyens pour obtenir une tension uniforme de la toile, même si le parallélisme n'est pas parfait.

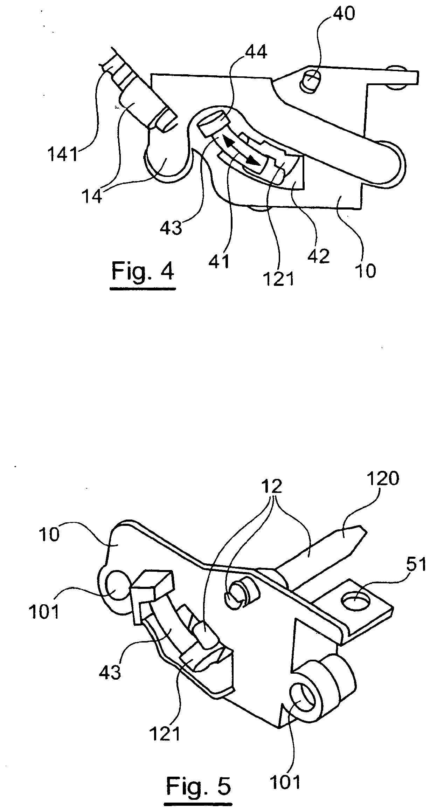

Ce second auto-équilibrage est obtenu à l'aide du palier mobile 12, déjà introduit en relation avec la figure 1. On décrit maintenant plus en détail le fonctionnement de ce palier mobile, illustré sur la figure 4.

Le tube enrouleur est solidarisé au palier fixe par l'intermédiaire du palier mobile 12. De plus, ce palier 12 est mobile en rotation perpendiculairement à l'axe 40 du tube enrouleur, selon un mouvement illustré par la flèche 41. Pour cela, le palier fixe 10 comprend une lumière (ou un trou borgne) de guidage 42, dans lequel circule un pion 121 formé dans le palier mobile 12. Des moyens de rappel 43 sont montés dans cette lumière 42, pour assurer la tension uniforme du store. De tels moyens de rappel peuvent être formés à l'aide d'un ressort, dont l'une des extrémités est fixée au pion 121 et l'autre extrémité est encastrée dans une zone 44 du palier fixe prévue à cet effet. Ainsi, le ressort agit sur le pion 121 et tend à ramener le palier mobile en rotation dans une position de repos, de manière à maintenir la toile tendue.

La figure 4 est une vue en trois dimensions du palier fixe 10, du palier mobile 12 et des moyens de rappel 43, isolés. Le tube enrouleur est inséré sur le doigt 120 (déjà introduit en relation avec la figure 1). Les lumières 101 sont prévues pour recevoir l'élément de solidarisation mobile en translation, et la lumière 51 permet le passage d'une vis de solidarisation du palier fixe 10 au boîtier dans lequel est rangé le store à enrouleur (ou directement au véhicule).

Les figures 2 et 5 montrent que le palier fixe 10 assure alors, par ses moyens de solidarisation d'une part avec le store à enrouleur, et d'autre part avec le véhicule, deux réglages complémentaire, et ce, grâce à un unique dispositif.

Le premier réglage est actif au moment du montage, et permet ainsi une intégration aisée et sans outil du store dans le véhicule, alors que le second réglage agit en permanence, une fois le montage réalisé, et assure l'absence de pli sur la toile lorsque celle-ci est déployée.

La figure 6 est un schéma fonctionnel détaillant le processus de montage selon l'invention.

Une étape 61 consiste en la fabrication du rail. Ce rail est ensuite intégré à la garniture du véhicule dans une étape 62. A ce stade du procédé, la garniture n'est pas encore intégrée au véhicule. Parallèlement et indépendamment, le store est fabriqué et assemblé dans une étape 63. Cette étape comprend notamment l'assemblage du palier fixe au palier mobile, à son élément de solidarisation comprenant une portion guide-rail. Le palier mobile est quant à lui solidarisé au tube enrouleur et donc au store.

Dans une étape 64, cet ensemble est fixé au véhicule, par exemple en vissant directement les paliers fixes à la tablette arrière ou en fixant le boîtier du store sur la tablette arrière.

On note alors ici que le store est fixé au véhicule avant l'ensemble formé par les rails et la garniture.

Vient enfin une étape 65 d'assemblage de l'ensemble formé par le rail et la garniture avec le deuxième ensemble comprenant le store, lui-même déjà fixé au véhicule. Cette étape 65 d'assemblage consiste à venir engager ou emmancher le rail, associé à la garniture du véhicule, dans la portion guide-rail de l'élément de solidarisation du palier fixe. C'est lors de cet assemblage qu'on exploite le degré de liberté en translation de l'invention, de telle sorte qu'un éventuel écart ou jeu est compensé, et que les rails et la garniture sont d'une part solidarisés au store, et d'autre part accolés aux montants latéraux de l'arrière du véhicule.

C'est en effet l'ensemble rail-garniture qui est intégré au véhicule après le store lui-même, et cet assemblage s'adapte en exploitant le jeu disponible entre le palier fixe et les moyens de solidarisation, de façon à compenser l'écart éventuellement présent entre les deux blocs à accoupler.

Bien que l'invention ait été décrite ci-dessus en relation avec un nombre limité de modes de réalisation, l'homme du métier, à la lecture de la présente description, comprend que d'autres modes de réalisation peuvent être imaginés sans sortir du cadre de la présente invention, comme définie par les revendications.

## Revendications

1. Store à enrouleur pour véhicule automobile, comprenant une toile d'occultation solidaire, par une première de ses extrémités, d'un tube (11) enrouleur monté sur deux paliers fixes (10) et, par la seconde de ses extrémités, d'une barre de tirage (31) guidée le long d'au moins un rail (13) intégré au véhicule,
ledit store comprenant des moyens de solidarisation (14) d'au moins un desdits paliers fixes (10) avec le ou lesdits rails (13), lesdits moyens de solidarisation (14) étant mobiles en translation par rapport audit palier fixe (10) suivant un axe sensiblement parallèle audit tube enrouleur (11),
**caractérisé en ce que** lesdits moyens de solidarisation (14) présentent au moins deux doigts (142) parallèles audit tube enrouleur (11), et circulant dans des lumières (101) ménagées dans ledit palier fixe (10).

2. Store à enrouleur selon la revendication 1, **caractérisé en ce que** lesdits moyens de solidarisation (14) sont solidaires avec un palier mobile (12) accouplé avec ledit tube enrouleur (11).

3. Store à enrouleur selon la revendication 1 ou 2, **caractérisé en ce que** lesdits moyens de solidarisation (14) comprennent une portion guide-rail (141), destinée à coopérer avec un élément d'assemblage complémentaire prévu à cet effet sur ledit rail (13).

4. Store à enrouleur selon l'une quelconque des revendications 1 à 3, **caractérisé en ce qu'**il comprend des premiers moyens de rappel tendant à éloigner ledit palier fixe (10) et lesdits moyens de solidarisation (14).

5. Store à enrouleur selon l'une quelconque des revendications 1 à 4, **caractérisé en ce que** ladite barre de tirage (31) est entraînée par au moins un câble guidé dans un desdits rails (13) et actionné par des moyens de motorisation (34) montés sur un support solidaire desdits paliers fixes (10).

6. Store à enrouleur selon les revendications 4 et 5, **caractérisé en ce que** ledit câble circule dans une gaine souple (30) entre lesdits moyens de motorisation (34) et ledit rail (13), et **en ce que** ladite gaine (30) est montée de façon à assurer la fonction desdits premiers moyens de rappel.

7. Store à enrouleur selon l'une quelconque des revendications 2 à 6, **caractérisé en ce que** ledit palier mobile est mobile (12) en rotation dans un plan perpendiculaire à l'axe dudit tube enrouleur (11), sur une plage angulaire déterminée.

8. Store à enrouleur selon la revendication 7, **caractérisé en ce que** ledit palier fixe (10) présente une ouverture périphérique (42) de guidage d'un pion (121) formé dans ledit palier mobile (12).

9. Store à enrouleur selon l'une quelconque des revendications 7 et 8, **caractérisé en ce qu'**il comprend des seconds moyens de rappel (43) agissant sur ledit palier mobile (12), de façon à le maintenir dans une position assurant une tension uniforme de ladite toile d'occultation.

10. Store à enrouleur selon les revendications 8 et 9, **caractérisé en ce que** lesdits seconds moyens de rappel (43) agissent sur ledit pion (121).

11. Véhicule automobile **caractérisé en ce qu'**il comprend au moins un store à enrouleur comprenant une toile d'occultation solidaire, par une première de ses extrémités, d'un tube enrouleur (11) monté sur deux paliers fixes (10) et, par la seconde de ses extrémités, d'une barre de tirage (31) guidée le long d'au moins un rail (13) intégré au véhicule, ledit store comprend des moyens de solidarisation (14) d'au moins un desdits paliers fixes (10) avec le ou lesdits rails (13), lesdits moyens de solidarisation (14) étant mobiles en translation par rapport audit palier fixe (10) suivant un axe sensiblement parallèle audit tube enrouleur (11), lesdits moyens de solidarisation (14) présentant au moins deux doigts (142) parallèles audit tube enrouleur (11), et circulant dans des lumières (101) ménagées dans ledit palier fixe (10).

## Patentansprüche

1. Rollladen für Kraftfahrzeug, der ein Verdunkelungstuch umfasst, das über ein erstes seiner Enden mit einer Aufrollröhre (11), die auf zwei stationäre Lager (10) montiert ist, und über das zweite seiner Enden mit einer Zugstange (31) fest verbunden ist, die entlang mindestens einer Schiene (13) geführt ist, die in das Fahrzeug eingebaut ist,
wobei der Rolladen Mittel zum festen Verbinden (14) mindestens eines der stationären Lager (10) mit der Schiene oder den Schienen (13) aufweist, wobei die Mittel zum festen Verbinden (14) in Bezug zu dem stationären Lager (10) entlang einer Achse, die zu der Aufrollröhre (11) im Wesentlichen parallel ist, in Verschiebung beweglich sind,
**dadurch gekennzeichnet, dass** die Mittel zum festen Verbinden (14) mindestens zwei Finger (142) parallel zu der Aufrollröhre (11) aufweisen, und die in Langlöchern (101), die in dem stationären Lager (10) eingerichtet sind, zirkulieren.

2. Rollladen nach Anspruch 1, **dadurch gekennzeichnet, dass** die Mittel zum festen Verbinden (14) mit einem beweglichen Lager (12), das mit der Aufrollröhre (11) gekoppelt ist, fest verbunden sind.

3. Rollladen nach Anspruch 1 oder 2, **dadurch gekennzeichnet, dass** die Mittel zum festen Verbinden (14) einen Führungsschienenabschnitt (141) umfassen, der dazu bestimmt ist, mit einem komplementären Zusammenfügeelement, das dazu auf der Schiene (13) vorgesehen ist, zusammenzuwirken.

4. Rollladen nach einem der Ansprüche 1 bis 3, **dadurch gekennzeichnet, dass** er erste Rückholmittel aufweist, die dazu tendieren, das stationäre Lager (10) und die Mittel zum festen Verbinden (14) zu entfernen.

5. Rollladen nach einem der Ansprüche 1 bis 4, **dadurch gekennzeichnet, dass** die Zugstange (31) von mindestens einem Kabel angetrieben wird, das in den Schienen (13) geführt und durch Antriebsmittel (34) betätigt wird, die auf einem Träger montiert sind, der fest mit den stationären Lagern (10) verbunden ist.

6. Rollladen nach den Ansprüchen 4 und 5, **dadurch gekennzeichnet, dass** das Kabel in einem biegsamen Mantel (30) zwischen den Antriebsmitteln (34) und der Schiene (13) zirkuliert, und dass der Mantel (30) derart montiert ist, dass er die Funktion der ersten Rückholmittel sicherstellt.

7. Rollladen nach einem der Ansprüche 2 bis 6, **dadurch gekennzeichnet, dass** das bewegliche Lager (12) in Drehung in einer Ebene senkrecht zu der Achse der Aufrollröhre (11) auf einem bestimmten Winkelbereich beweglich ist.

8. Rollladen nach Anspruch 7, **dadurch gekennzeichnet, dass** das stationäre Lager (10) eine periphere Öffnung (42) zum Führen eines Zapfens (121) aufweist, der in dem beweglichen Lager (12) ausgebildet ist.

9. Rollladen nach einem der Ansprüche 7 und 8, **dadurch gekennzeichnet, dass** er zweite Rückholmittel (43) aufweist, die auf das bewegliche Lager (12) derart einwirken, dass es in einer Position gehalten wird, die eine gleichförmige Spannung des Verdunkelungstuchs sicherstellt.

10. Rollladen nach den Ansprüchen 8 und 9, **dadurch gekennzeichnet, dass** die zweiten Rückholmittel (43) auf den Zapfen (121) einwirken.

11. Kraftfahrzeug, **dadurch gekennzeichnet, dass** es mindestens einen Rollladen aufweist, der ein Verdunkelungstuch aufweist, das über ein erstes seiner Enden mit einer Aufrollröhre (11), die auf zwei stationäre Lager (10) montiert ist, fest verbunden ist, und über das zweite seiner Enden mit einer Zugstange (31), die entlang mindestens einer Schiene (13), die in das Fahrzeug eingebaut ist, geführt ist, fest verbunden ist, wobei der Rollladen Mittel zum festen Verbinden (14) mindestens eines der stationären Lager (10) mit der Schiene oder den Schienen (13) aufweist, wobei die Mittel zum festen Verbinden (14) in Bezug zu dem stationären Lager (10) entlang einer Achse beweglich sind, die im Wesentlichen zu der Aufrollröhre (11) parallel ist, wobei die Mittel zum festen Verbinden (14) mindestens zwei Finger (142) parallel zu der Aufrollröhre (11) und die in Langlöchern (101), die in dem stationären Lager (10) eingerichtet sind, zirkulieren, aufweisen.

## Claims

1. Roller blind for motor vehicle, comprising a screening fabric connected, by a first end thereof, to a winding tube (11) mounted on two connected bearings (10) and, by the second end thereof, to a pull bar (31) guided along at least one rail (13) integrated in the vehicle,
the said blind comprising means for connecting (14) at least one of said fixed bearings (10) to said rail(s) (13), said connecting means (14) being mobile in translation relative to said fixed bearing (10) along an axis substantially parallel to said winding tube (11),
**characterised in that** said connecting means (14) have at least two fingers (142) parallel to said winding tube (11) and moving in apertures (101) formed in said fixed bearing (10).

2. Roller blind according to Claim 1, **characterised in that** said connecting means (14) are connected to a mobile bearing (12) coupled to said winding tube (11).

3. Roller blind according to Claim 1 or 2, **characterised in that** said connecting means (14) comprise a guide rail portion (141) for cooperating with a complementary mounting element provided to this end on said rail (13).

4. Roller blind according to any one of Claims 1 to 3, **characterised in that** it comprises first return means tending to separate said fixed bearing (10) from said connecting means (14).

5. Roller blind according to any one of Claims 1 to 4, **characterised in that** said pull bar (31) is driven by at least one cable guided in one of said rails (13) and actuated by motorised means (34) mounted on a support connected to said fixed bearings (10).

6. Roller blind according to Claims 4 and 5, **characterised in that** said cable moves in a flexible sheath (30) between said motorised means (34) and said rail (13) and **in that** said sheath (30) is mounted so as to ensure the operation of said first return means.

7. Roller blind according to any one of Claims 2 to 6, **characterised in that** said mobile bearing is mobile (12) in rotation in a plane perpendicular to the axis of said winding tube (11) over a specific angular range.

8. Roller blind according to Claim 7, **characterised in that** said fixed bearing (10) has a peripheral opening (42) for guiding a lug (121) formed in said mobile bearing (12).

9. Roller blind according to any one of Claims 7 and 8, **characterised in that** it comprises second return means (43) acting on said mobile bearing (12) so as to hold said mobile bearing in a position ensuring uniform tension of said screening fabric.

10. Roller blind according to Claims 8 and 9, **characterised in that** said second return means (43) act on said lug (121).

11. Motor vehicle **characterised in that** it comprises at least one roller blind comprising a screening fabric connected, by a first end thereof, to a winding tube (11) mounted on two fixed bearings (10) and, by the second end thereof, to a pull bar (31) guided along at least one rail (13) integrated in the vehicle, and **in that** said blind comprises means for connecting (14) at least one of said fixed bearings (10) to said rail(s) (13), said connecting means (14) being mobile in translation relative to said fixed bearing (10) along an axis substantially parallel to said winding tube (11), said connecting means (14) having at least two fingers (142) parallel to said winding tube (11) and moving in apertures (101) formed in said fixed bearing (10).
